# EUROPÄISCHE PATENTSCHRIFT

(11) **EP 1 808 436 B1**
(45) Veröffentlichungstag und Bekanntmachung des Hinweises auf die Patenterteilung: **18.02.2009**
(21) Anmeldenummer: 06117189.8
(22) Anmeldetag: 14.07.2006
(51) Int. Cl.: C07F 7/18

(54) **Verfahren zur Herstellung von Organosiliciumverbindungen**
Preparation of organosilicon compounds
Préparation de composés organosiliciques

(30) Priorität: 10.08.2005 DE 102005037690
(43) Veröffentlichungstag der Anmeldung: 18.07.2007
(73) Patentinhaber: Evonik Degussa GmbH, 45128 Essen (DE)
(72) Erfinder: Frings, Albert, 50321, Brühl (DE); Janssens, Louis, 2170, Merksem (BE); Lotter, Stefan, 63454, Hanau (DE); Deschler, Ulrich, 63877, Sailauf (DE); Alig, Alfred, 63826, Geiselbach-Omersbach (DE)

(56) Entgegenhaltungen:
- EP-A2- 0 848 006
- EP-A2- 1 130 023
- WO-A-03/002573

## Beschreibung

Die Erfindung betrifft ein Verfahren zur Herstellung von Organosiliciumverbindungen.

Es ist bekannt, Silylalkylpolysulfane im wesentlichen durch eine nucleophile Substitution an Chloralkylsilanen mit auf verschiedene Art und Weise hergestellten anionischen Polysulfiden herzustellen (DE-PS 2141159). Die Aufarbeitung des Gemisches bestehend aus den Organosiliciumverbindungen und des bei der nucleophilen Substitution gebildeten Feststoffes, im vorliegenden Fall ein Salz, erfolgt durch Filtration bzw. Zentrifugation. Das dabei anfallende Salz ist sehr feinteilig, wenn dieses aus einer organischen Phase ausfällt.

Ferner ist aus US 6,777,569 ein Verfahren zur Herstellung von geblockten Mercaptosilanen bekannt, wobei das Metallsalz einer Mercaptogruppe-enthaltenden Organosiliciumverbindung in Gegenwart von Toluol mit einem Acylhalogenid umgesetzt wird. Die Aufarbeitung des Gemisches bestehend aus der Organosiliciumverbindung und des bei der nucleophilen Substitution gebildeten Salzes erfolgt durch vollständiges Auflösen des Salzes in vollentsalztem Wasser und anschließende Phasentrennung. Die Phasentrennung wird durch die Anwesenheit von Toluol maßgeblich unterstützt. Die organische Phase enthält deshalb neben der Organosiliciumverbindung Toluol, welches im Anschluß an die Phasentrennung destillativ entfernt werden muß.

Aus US 5,405,985, US 5,468,893, US 5,663,396, US 5,583,245 und EP-A 0694552 sind Verfahren bekannt, die das entsprechende Polysulfid in wäßriger Lösung aus Sulfiden und Schwefel herstellen und in einem Zweiphasensystem mit Halogenalkylsilanen in Gegenwart von Toluol und Phasentransferkatalysator zu Polysulfanen umsetzen. Bei dieser Verfahrensweise erfolgt die Aufarbeitung des Gemisches, bestehend aus der Organosiliciumverbindung und des bei der nucleophilen Substitution gebildeten Salzes, durch vollständiges Auflösen des Salzes in vollentsalztem Wasser und anschließende Phasentrennung. Die Phasentrennung wird durch die Anwesenheit von Toluol maßgeblich unterstützt. Die organische Phase enthält deshalb neben der Organosiliciumverbindung Toluol, welches im Anschluß an die Phasentrennung destillativ entfernt werden muß. Bei dieser Vorgehensweise verbleibt der Phasentransferkatalysator bzw. dessen Abbauprodukt in den schwefelhaltigen Organosiliciumverbindungen mit bisher ungeklärtem Einfluß auf das anwendungstechnische Wertebild der Bis(silylalkyl)polysulfane.

Ferner sind aus US 6,448,426, US 6,384,255, US 6,384,256, WO 03/002573, WO 03/002576, WO 03/002577, WO 03/002578 und WO 04/043969 Verfahren bekannt, die das entsprechende Polysulfid in wäßriger Lösung aus Sulfiden und Schwefel oder Hydrogensulfiden, Alkalimetallhydroxiden und Schwefel herstellen, und in einem Zweiphasensystem mit Halogenalkylsilanen in Gegenwart eines Phasentransferkatalysators zu Polysulfanen umsetzen. Die Aufarbeitung des Gemisches, bestehend aus der Organosiliciumverbindung und des bei der nucleophilen Substitution gebildeten Salzes, erfolgt durch vollständiges Auflösen des Salzes in Wasser und anschließende Phasentrennung. Bei dieser Verfahrensweise verbleibt der Phasentransferkatalysator bzw. dessen Abbauprodukte in den schwefelhaltigen Organosiliciumverbindungen mit bisher ungeklärtem Einfluß auf das anwendungstechnische Wertebild der Bis(silylalkyl)polysulfane.

Nachteil der bekannten Verfahren, bei denen die Organosiliciumverbindungen unter wasserfreien Bedingungen hergestellt werden, ist die schwierige und kostenintensive Abtrennung der entstehenden feinteiligen Feststoffe.

Aufgabe der Erfindung ist es, ein Verfahren zur Verfügung zu stellen, das eine möglichst einfache und kostengünstige Aufarbeitung von Gemischen bestehend aus Organosiliciumverbindungen und Feststoffen erlaubt.

Ein weiterer Nachteil der bekannten Verfahren, bei denen die Polysulfane durch Umsetzung des entsprechenden Polysulfids, das in wäßriger Lösung aus Sulfiden und Schwefel gewonnen wird, in einem Zweiphasensystem mit Halogenalkylsilanen in Gegenwart eines Lösungsmittels, wie z. B. Toluol, erhalten werden, besteht darin, daß die schwefelhaltigen Organosiliciumverbindungen von dem Lösungsmittel, beispielsweise durch Vakuumdestillation, befreit werden müssen. Nachteilig ist außerdem, daß das erhaltene Lösungsmittel vor dem weiteren Einsatz ggf. zu trocknen ist.

Eine weitere Aufgabe der Erfindung besteht darin, ein Verfahren zur Verfügung zu stellen, daß die Herstellung schwefelhaltiger Organosiliciumverbindungen ermöglicht, die keine Lösungsmittel zur Unterstützung der Phasentrennung erfordern.

Ein weiterer Nachteil der bekannten Verfahren, bei denen die Polysulfane durch Umsetzung des entsprechenden Polysulfids, das in wäßriger Lösung aus Sulfiden und Schwefel gewonnen wird, in einem Zweiphasensystem mit Halogenalkylsilanen in Gegenwart eines Phasentransferkatalysators erhalten werden, besteht darin, daß die schwefelhaltigen Organosiliciumverbindungen mit dem Phasentransferkatalysator bzw. dessen Abbauprodukte verunreinigt sind.

Eine weitere Aufgabe der Erfindung besteht darin, ein Verfahren zur Verfügung zu stellen, daß die Herstellung schwefelhaltiger Organosiliciumverbindungen ermöglicht, die frei von einem verfahrensbedingt zwingend notwendigen Phasentransferkatalysator bzw. dessen Abbauprodukten sind.

Gegenstand der Erfindung ist ein Verfahren zur Herstellung von Organosiliciumverbindung der allgemeinen Formel (I),

(R¹R²R³SiR⁴)₂Sₓ (I)

in der bedeuten
R¹, R², R³: gleich oder verschieden voneinander, verzweigte oder unverzweigte Alkylgruppen, vorzugsweise mit einer Kettenlänge von 1-8 C-Atomen, verzweigte oder unverzweigte Alkoxygruppen, vorzugsweise mit einer Kettenlänge von 1-20 C-Atomen, besonders bevorzugt mit einer Kettenlänge von 1-4 oder 12-18 C-Atomen, ganz besonders bevorzugt Methoxy oder Ethoxy, Alkylethergruppe, Alkylpolyethergruppe oder Arylreste, vorzugsweise Phenyl, Toluyl oder Benzyl, sind, wobei mindestens eine der Gruppen R¹, R², R³ eine Alkoxygruppe ist,
R⁴: eine verzweigte oder unverzweigte, gesättigte oder ungesättigte, aliphatische, aromatische oder gemischt aliphatische /aromatische zweibindige C₁-C₃₀ -, bevorzugt C₁-C₂₀ -, besonders bevorzugt C₁-C₁₀-, ganz besonders bevorzugt C₁-C₇ -, insbesondere bevorzugt C₃, Kohlenwasserstoffgruppe, die gegebenenfalls mit F-, Cl-, Br-, I-, HS-, NH₂-, oder NHR' substituiert ist, mit R' verzweigte oder unverzweigte einbindige Alkyl- oder Alkenyl-Gruppe, eine Arylgruppe, eine Aralkylgruppe, eine Alkylethergruppe, eine Alkylpolyethergruppe ist,
x eine Zahl>1, bevorzugt von 2 bis 8, insbesondere bevorzugt 2 bis 6 ist,
durch Umsetzung von Halogenalkoxysilanen der allgemeinen Formel (II),

R¹R²R³SiR⁴X (II)

in der R¹, R², R³, R⁴ die Bedeutung aus Formel (I) haben und X ein Halogenatom, vorzusweise Cl, Br oder J, ist,
mit einem trockenen Polysulfid der allgemeinen Formel (III)

M₂S_{z} (III)

und/oder trockenem Sulfid der allgemeinen Formel IV

M₂S (IV)

wobei
M für ein Alkalikation, ein Ammonium-, ein halbes Erdalkali- oder Zinkkation und
z für eine Zahl von 2 bis 8, bevorzugt 2 bis 6, steht,
und ggf. Schwefel in einem organischen Lösungsmittel, welches dadurch gekennzeichnet ist, daß man
das organische Lösungsmittel aus der entstehenden Suspension entfernt,
das Gemisch, enthaltend die Organosiliciumverbindung der allgemeinen Formel (I) und den Feststoff MX, mit Wasser, enthaltend mindestens einen Puffer, mischt
und die sich bildenden Phasen trennt.

Das erfindungsgemäße Verfahren kann ohne Katalysator, insbesondere ohne Phasentransferkatalysator, durchgeführt werden.

Die Organosiliciumverbindung der allgemeinen Formel (I) kann eine Mischung von Organosiliciumverbindungen der allgemeinen Formel (I) mit unterschiedlichen Schwefelkettenlängen x sein.

Die Organosiliciumverbindung der allgemeinen Formel (I) kann vorzugsweise Bis(triethoxysilylpropyl)disulfan, Bis(triethoxysilylpropyl)tetrasulfan, Bis(methyldiethoxysilylpropyl)disulfan, Bis(methyldiethoxysilylpropyl)tetrasulfan, Bis(dimethylethoxysilylpropyl)disulfan oder Bis(dimethylethoxysilylpropyl)tetrasulfan sein.

Die Reaktanden Halogenalkoxysilane gemäß Formel (II) und die Sulfide gemäß Formel (III) und/oder Formel (IV) können gemeinsam in einem Lösungsmittel bzw. Lösungsmittelgemisch vorgelegt und zur Reaktion gebracht werden oder man dosiert einen der beiden Reaktanden so oder als Lösung zu dem zweiten Reaktanden zu. Der zweite Reaktand kann ebenfalls als Stoff oder als Lösung vorliegen. Für die erfindungsgemäße Durchführung des Verfahrens kann es nicht kritisch sein, welcher der beiden Reaktanden vorgelegt und welcher zudosiert wird.

In einer bevorzugten Form der Erfindung können beide Reaktanden Halogenalkoxysilane gemäß Formel II und Sulfide gemäß Formel (III) und/oder Formel (IV) in einem organischen Lösungsmittel bzw. Lösungsmittelgemisch vorgelegt und anschließend zur Reaktion gebracht werden.

Das organische Lösungsmittel kann ein inertes organisches Lösungsmittel sein. Das organische Lösungsmittel kann Ether, beispielsweise Diethylether, Diisopropylether, Dibutylether, Methyl-tert.-butylether, Tetrahydrofuran, Dioxan, Dimethoxyethan und Diethoxyethan, Alkohole, beispielsweise Methanol, Ethanol, Propanol und Ethylenglycol, und aliphatische oder aromatische Kohlenwasserstoffe, beispielsweise Pentan, Hexan, Heptan, Petrolether, Benzol, Toluol und Xylol, sein. Das organische Lösungsmittel kann so ausgewählt werden, daß unerwünschte Umesterungen am Siliciumatom ausgeschlossen sind. Bevorzugte organische Lösungsmittel können Alkohole sein, wobei in einer besonders bevorzugten Ausführungsform der verwendete Alkohol dem der im Alkoxysilylrest gebundenen Alkoxygruppe entspricht. Besonders bevorzugt kann man als organisches Lösungsmittel Ethanol einsetzen, wenn eine der Gruppen R¹, R², R³ in Formel (I) einer Ethoxygruppe entspricht.

Das organische Lösungsmittel kann einen Wassergehalt von ≤ 1 Gew.-%, bevorzugt ≤ 0,5 Gew.-%, besonders bevorzugt ≤ 0,1 Gew.-%, aufweisen.

Die Reaktionszeit kann abhängig sein von der Reaktionstemperatur. Je höher die Reaktionstemperatur, desto kürzer kann die zur vollständigen Umsetzung des Halogenalkoxysilane gemäß Formel (II) mit den Sulfiden gemäß Formel (III) und/oder Formel (IV) nötige Zeit sein. Die Reaktionszeit kann 1 bis 8 h betragen.

Das trockene Polysulfid der allgemeinen Formel (III) kann einen Wassergehalt von ≤ 10 Gew.-%, bevorzugt ≤ 5 Gew.-%, besonders bevorzugt ≤ 2 Gew.-%, ganz besonders bevorzugt ≤ 1 Gew.-%, haben.

Das trockene Sulfid der allgemeinen Formel (IV) kann einen Wassergehalt von ≤ 10 Gew.-%, bevorzugt ≤ 5 Gew.-%, besonders bevorzugt ≤ 2 Gew.-%, ganz besonders bevorzugt ≤ 1 Gew.-%, haben.

Das organische Lösungsmittel kann durch Destillation von der entstehenden Suspension abgetrennt werden.

Der Puffer, der die Pufferlösung innerhalb eines für die Stabilität der Organosiliciumverbindungen optimalen pH-Bereiches hält, kann bezüglich Typ und Konzentration weitgehend variiert werden. Als Puffer können organische und anorganische Säuren und Basen und deren Salze, bevorzugt Alkalimetall-, Erdalkalimetall- oder Ammoniumsalze von Carbonsäuren, Phosphorsäure, Schwefelsäure, C₁ - C₆ Organo-, Mono- oder Polycarboxylsäuren eingesetzt werden. Als Puffer können beispielsweise NaHCO₃, Na₂CO₃, Ammoniumcarbonat, Natriumborat, Mononatriumphosphat, Dinatriumphosphat, Trinatriumphosphat, Monokaliumphosphat, Dikaliumphosphat, Trikaliumphosphat, Mononatriumsulfat, Dinatriumsulfat, Natriumacetat, Kaliumacetat, Ammoniumacetat, Calciumacetat, Natriumformiat, Natriumsulfid, Natriumhydrogensulfid, Ammoniak, Monoethylamin, Diethylamin, Triethylamin, Monoethanolamin, Diethanolamin, Triethanolamin, Pyridin und Anilin eingesetzt werden. Kombinationen dieser Puffer oder Kombinationen dieser Puffer mit anderen Puffern, beispielsweise Säuren oder Basen, können ebenfalls eingesetzt werden.

Bevorzugte Puffer können Trinatriumphosphat (Na₃PO₄), Ammoniumhydroxid (NH₄OH) und besonders bevorzugt Natriumhydrogencarbonat NaHCO₃ sein, wobei das Natriumhydrogencarbonat einen pH-Wert von 7,5 ± 0,5 einstellt, keinen negativen Umweltauswirkungen verursacht und einen vergleichsweise niedrigen Preis hat.

Der Puffer kann in einer Konzentration von 0,1 bis 80 Gew.-%, bevorzugt 0,1 bis 20 Gew.-%, besonders bevorzugt 0,1 bis 10 Gew.-%, ganz besonders bevorzugt 0,1 bis 5 Gew.-%, in dem Wasser enthalten sein.

Die sich bildenden Phasen nach der Zugabe des Wassers, enthaltend den Puffer, können den Feststoff in gelöster oder kristalliner Form enthalten, abhängig unter anderem von der Wassermenge, Temperatur und weiteren Bedingungen.

Das Wasser, enthaltend den Puffer, kann in einer Menge von 10 bis 150 Gew.-%, vorzugsweise 50 bis 71 Gew.-%, bezogen auf die Organosiliciumverbindung zugegeben werden, wenn der Feststoff quantitativ aufgelöst werden soll.

Das Wasser, enthaltend den Puffer, kann in einer Menge von 0,1 bis 30 Gew.-%, vorzugsweise 1 bis 4 Gew.-%, bezogen auf die Organosiliciumverbindung zugegeben werden, wenn der Feststoff abfiltriert oder zentrifugiert werden soll, nachdem der feinkristalline Feststoff durch Zugabe von wenig Wasser, enthaltend den Puffer, in grobteilige Feststoffpartikel umgewandelt wird.

Der Feststoff kann das bei der Herstellung der Organosilicumverbindung der allgemeinen Formel (I) anfallende Salz MX sein, wobei M und X die oben angegebene Bedeutung haben.

Die Zugabe des Wassers, enthaltend den Puffer, kann bei einer Temperatur von 0-100°C, bevorzugt 20-80°C, besonders bevorzugt 40-60°C, durchgeführt werden.

Die zum vollständigen Auflösen des Feststoffes notwendige Zeit kann abhängig sein von der Temperatur. Je höher die Temperatur, desto kürzer kann die zum vollständigen Auflösen des Feststoffes nötige Zeit sein. Die Zugabe des Wassers, enthaltend den Puffer, kann in weniger als 1 h, bevorzugt weniger als 1/2 h, besonders bevorzugt weniger als 1/4 h, erfolgen.

Zur Veränderung der Morphologie des feinkristallinen Feststoffes in grobe Feststoffpartikel durch Zugabe von wenig Wasser, enthaltend den Puffer, kann die Temperatur während der Dosierung und Zeitdauer der Zugabe unkritisch sein.

Die sich bildenden Phasen nach der Zugabe des Wassers, enthaltend den Puffer, kann in einem Reaktor oder einem anderen Behälter innerhalb 1/4 h bis 3 h durchgeführt werden.

Die sich bildenden Phasen nach der Zugabe des Wassers, enthaltend den Puffer, können abhängig ob der Feststoff gelöst ist oder nicht, durch Filtration, Zentifugation oder Sedimentation (bei ungelöstem Feststoff) und Dekantieren oder Ablassen der Phasen in verschiedene Behälter (bei gelöstem Feststoff) getrennt werden. Für die Filtration kann man einen Druckfilter einsetzen.

Die Vorteile des erfindungsgemäßen Verfahrens besteht darin, daß auf Filter oder Zentrifugen zur Abtrennung der Feststoffe verzichtet werden kann, was eine enorme technische Vereinfachung des Verfahrens zur Herstellung von Organosiliciumverbindungen und eine Reduktion der Herstellkosten bedeutet, bzw. die Filtration oder Zentrifugation nach der Veränderung der Morphologie der Feststoffe wesentlich erleichtert und die Zeitdauer für diesen Verfahrensschritt drastisch verkürzt werden kann, wenn der Abtrennung der grobteiligen Feststoffpartikel in fester deponiefähiger Form der Vorzug gegeben wird. Ein weiterer Vorteil gegenüber den bekannten Verfahren, die mit Phasentransferkatalysator arbeiten und deshalb mit dem Phasentransferkatalysator bzw. den Abbauprodukten des Phasentransferkatalysators verunreinigte Organosiliciumverbindungen ergeben, besteht darin, daß keine Verunreinigungen dieser Art in den Organosiliciumverbindungen enthalten sind. Gegenüber den bekannten Verfahren, die organische Lösungsmittel, wie z. B. Toluol, zur Verbesserung der Phasentrennung einsetzen, besteht bei dem vorgestellten Verfahren der Vorteil, daß keine organischen Lösungsmittel zur Unterstützung der Phasentrennung notwendig sind und eine Aufarbeitung, beispielsweise Trocknung, derselben entfällt.

### Beispiele:

### Beispiel 1:

Man setzt 2535 g CIPTES (3-Chlorpropyltriethoxysilan) mit 870 g NPS (Natriumpolysulfid, Na₂S_{z} mit z im Mittel gleich 4, Wassergehalt 0,1 Gew.-%) in 2165 ml Ethanol bei 78°C um. Aus dem erhaltenen Reaktionsgemisch wird am Rotationsverdampfer Ethanol destillativ entfernt, zuletzt bei einer Sumpftemperatur von 100°C und einem Druck von <1 mbar. Die Ethanolkonzentration beträgt am Ende der Destillation <0,1 Gew.-%. Zu dem auf diese Weise erhaltenen Gemisch aus 3378 g Bis(triethoxysilylpropyl)tetrasulfan und NaCl (Zusammensetzung rechnerisch: 2769 g Bis(triethoxysilylpropyl)tetrasulfan und 609 g NaCl) werden bei 50°C insgesamt 1800 g Pufferlösung (2 % NaHCO₃ in vollentsalztem Wasser) durch ein Tauchrohr dosiert, um das Salz zu lösen. Nach Zugabe von ca. der Hälfte der Pufferlösung wird der Rührer auf die niedrigst mögliche Drehzahl eingestellt. Es bilden sich sofort zwei Phasen. Das gesamte Salz befindet sich in der wässrigen Phase. Die Phasentrennung bleibt wegen der niedrigen Rührerdrehzahl bis zum Ende der Zugabe der Pufferlösung bestehen. Während der Zugabe der Pufferlösung verändert sich das Erscheinungsbild des NaCl. Das feinkristalline Salz, wie es bei der Synthese von Bis(triethoxysilylpropyl)tetrasulfan aus NPS und ClPTES anfällt, wird zunehmend grobkristalliner. Am Ende der Dosierung, als der größte Teil NaCl gelöst ist, wird das Salz wieder feinkristallin. Man beobachtet Flockenbildung in der wässrigen Phase, nachdem sich das Salz gelöst hat. Solange sich ungelöstes Salz in der wässrigen Phase befindet, ist die überstehende gelb gefärbte Lösung klar. Flocken sind nicht erkennbar.

Der gesamte Ansatz wird aus dem Reaktor abgelassen und ausgewogen:
Die Einsatzmenge beträgt 5178 g. Die Auswaage beträgt 5135 g. 43 g verbleiben im Reaktor.

Während des Ablassens werden die wässrige Phase und organische Phase getrennt:
Die Menge wässrige Phase beträgt 2255 g (rechnerisch werden 2409 g erwartet). Die Menge organische Phase beträgt 2880 g (rechnerisch werden 2769 g erwartet). Die Zwischenphase wird der organischen Phase zugeschlagen.
   Im Scheidetrichter trennt man 193 g Zwischenphase ab, in der sich relativ viel Wasser neben Produkt befindet. Organische Phase und Zwischenphase werden am Rotationsverdampfer bei 100°C und einem Druck von <1 mbar getrocknet.

Nach Trocknung der organischen Phase erhält man 2601 g Bis(triethoxysilylpropyl)tetrasulfan (25 g Wasser und 29 g NaCl werden abgetrennt).

Nach Trocknung der Zwischenphase erhält man weitere 108 g Bis(triethoxysilylpropyl)tetrasulfan (61 g Wasser und 13,6 g NaCl werden abgetrennt).

In Summe werden 2709 g Bis(triethoxysilylpropyl)tetrasulfan isoliert; dies entspricht 97,8 % der theoretisch erwarteten Menge von 2769 g Produkt. Berücksichtigt man Verluste bei der Versuchdurchführung und Schwankungen in der Zusammensetzung des Reaktionsgemisches, kann davon ausgegangen werden, daß das Produkt quantitativ erhalten wird.

Die Flocken in der wässrigen Phase setzten sich allmählich ab. Die überstehende gelb gefärbte Lösung wird klar.

### Beispiel 2:

Man setzt 700 g ClPTES (3-Chlorpropyltriethoxysilan) mit 239 g NPS (Natriumpolysulfid, Na₂S_{z} mit z im Mittel gleich 4, Wassergehalt 0,1 Gew.-%) in 595 ml Ethanol bei 78°C um. Aus dem erhaltenen Reaktionsgemisch wird am Rotationsverdampfer Ethanol destillativ entfernt, zuletzt bei einer Sumpftemperatur von 100°C und einem Druck von <1 mbar. Die Ethanolkonzentration beträgt am Ende der Destillation <0,1 Gew.-%. Zu dem auf diese Weise erhaltenen Gemisch aus 928 g Bis(triethoxysilylpropyl)tetrasulfan und NaCl (Zusammensetzung rechnerisch: 761 g Bis(triethoxysilylpropyl)tetrasulfan und 167 g NaCl) werden bei 50°C durch ein Tauchrohr nur 30 ml Pufferlösung dosiert. Das feinkristalline Salz wird grobkristallin und läßt sich sehr gut abfiltrieren. Das Filtrat ist von gelber Farbe. Es haben sich keine zwei flüssigen Phasen gebildet, da die Menge an Pufferlösung, im Gegensatz zu Beispiel 1, nicht ausreicht um das Salz zu lösen (Bildung einer festen und einer flüssigen Phase).

Isoliert werden 220 g feuchtes Salz (NaCl) und 716 g Bis(triethoxysilylpropyl)tetrasulfan.

Das Salz wird in 400 g Pufferlösung gelöst. Es bilden sich zwei Phasen, wobei das Erscheinungsbild der organischen Phase der üblicherweise auftretenden Zwischenphase entspricht. Die Phasen werden getrennt und die organische Phase am Rotationsverdampfer getrocknet. Man isoliert 29 g Produkt (30 g Wasser und 14,5 g NaCl werden abgetrennt). Insgesamt werden 745 g Si69 isoliert; dies entspricht 97,9 % der theoretisch erwarteten Menge von 761 g Produkt.

### Beispiel 3:

Man setzt 2.580 g ClPTES (3-Chlorpropyltriethoxysilan) mit 304 g NPS (Natriumpolysulfid, Na₂S_{z} mit z im Mittel gleich 4, Wassergehalt 0,1 Gew.-%) und 298 g NST (Natriumsulfid trocken, Na₂S, Wassergehalt <1 Gew.-%) in 2.340 ml Ethanol bei 78°C um. Aus dem erhaltenen Reaktionsgemisch wird am Rotationsverdampfer Ethanol destillativ entfernt, zuletzt bei einer Sumpftemperatur von 100°C und einem Druck von <1 mbar. Die Ethanolkonzentration beträgt am Ende der Destillation <0,1 Gew.-%. Zu dem auf diese Weise erhaltenen Gemisch aus 3.201 g Bis(triethoxysilylpropyl)disulfan und NaCl (Zusammensetzung rechnerisch: 2.602 g Bis(triethoxysilylpropyl)disulfan und 599 g NaCl) werden bei 50°C insgesamt 1.840 g Pufferlösung (2 % NaHCO₃ in vollentsalztem Wasser) durch ein Tauchrohr dosiert, um das Salz zu lösen. Während der Zugabe der Pufferlösung beobachtet man, daß das Salz zunächst immer größere Aggregate bildet. Das Salz nimmt 1/3 des Wassers auf ohne, daß eine wässrige Phase erkennbar ist. Die Salzaggregate werden so groß, daß diese sich sofort absetzten, wenn man den Rührer abstellt.

Nach Zugabe der gesamten Menge Pufferlösung und Phasentrennung werden isoliert:

2.371 g wässrige Phase (rotbraune Farbe; im Vergleich zur wässrigen Phase aus der Aufarbeitung der Gemische aus Beispiel 1 starker H₂S-Geruch),
119 g Zwischenphase (typisches Erscheinungsbild), 2.516 g organische Phase.

Erwartet werden 2.439 g wässrige Phase (Menge Salz plus Menge Pufferlösung). Die wässrige Phase hat einen pH-Wert von 8. Der CSB (chemischer Sauerstoffbedarf, Bestimmung nach DIN 38409 Teil 41) liegt bei 44.905 mg/kg und damit im Vergleich zur wässrigen Phase aus der Aufarbeitung des Gemisches aus Bis(triethoxysilylpropyl)tetrasulfan und NaCl (Beispiel 1) sehr hoch. Dieser ausgesprochen hohe CSB hat seine Ursache im Na₂S, das in der Synthese von Bis(triethoxysilylpropyl)disulfan im Überschuß eingesetzt wird und sich in der wässrigen Phase löst. Der starke H₂S-Geruch ist damit auch zu erklären.

Nach Aufarbeitung der organischen Phase (Entfernung des Wassers am Rotationsverdampfer bei 100°C und einem Druck von <1 mbar und Filtration) erhält man 2.455 g Produkt von fahlgelber Farbe typisch für Bis(triethoxysilylpropyl)disulfan. 37 g Wasser und 3,3 g Filterrückstand (Salz) werden abgetrennt.

Aus der Zwischenphase werden weitere 37 g Produkt gewonnen. Die Differenz zu den isolierten 119 g Zwischenphase sind Wasser und Salz. Insgesamt werden 2.492 g Si266 isoliert (entspricht 95,7 % der berechneten Menge).

## Patentansprüche

1. Verfahren zur Herstellung von Organosiliciumverbindung der allgemeinen Formel (I),
(R¹R²R³SiR⁴)₂Sₓ (I)
in der bedeuten
R¹, R², R³: gleich oder verschieden voneinander, verzweigte oder unverzweigte Alkylgruppen, verzweigte oder unverzweigte Alkoxygruppen oder Arylreste sind, wobei mindestens eine der Gruppen R¹, R², R³ eine Alkoxygruppe ist,
R⁴: eine verzweigte oder unverzweigte, gesättigte oder ungesättigte, aliphatische, aromatische oder gemischt aliphatische /aromatische zweibindige C₁-C₃₀ - Kohlenwasserstoffgruppe ist,
x eine Zahl>1 ist,
durch Umsetzung von Halogenalkoxysilanen der allgemeinen Formel (II),
R¹R²R³SiR⁴X (II)
in der
R¹, R², R³, R⁴ die Bedeutung aus Formel (I) haben und X ein Halogenatom ist,
mit einem trockenen Polysulfid der allgemeinen Formel (III)
M₂S_{z} (III)
und/oder trockenem Sulfid der allgemeinen Formel IV,
M₂S (IV)
wobei
M für ein Alkalikation, ein Ammonium-, ein halbes Erdalkali- oder Zinkkation und
z für eine Zahl von 2 bis 8 steht,
und ggf. Schwefel in einem organischen Lösungsmittel, **dadurch gekennzeichnet, daß** man das organische Lösungsmittel aus der entstehenden Suspension entfernt,
das Gemisch, enthaltend die Organosiliciumverbindung der allgemeinen Formel (I) und den Feststoff MX, mit Wasser, enthaltend mindestens einen Puffer, mischt
und die sich bildenden Phasen trennt.

## Claims

1. Process for the preparation of an organosilicon compound of the general formula (I)
(R¹R²R³SiR⁴)₂Sₓ (I)
in which the meanings are as follows R¹, R², R³ are: identical to or different from one another and are branched or unbranched alkyl groups, branched or unbranched alkoxy groups or aryl radicals, at least one of the groups R¹, R², R³ being an alkoxy group,
R⁴ is: a branched or unbranched, saturated or unsaturated, aliphatic, aromatic or mixed aliphatic/aro-matic divalent C₁-C₃₀ -hydrocarbon group,
x is a number >1, by reacting haloalkoxysilanes of the general formula (II)
R¹R²R³SiR⁴X (II)
in which
R¹, R², R³, R⁴ have the meaning from formula (I) and X is a halogen atom,
with a dry polysulphide of the general formula (III)
M₂S_{z} (III)
and/or dry sulphide of the general formula IV
M₂S (IV)
in which
M represents an alkali metal cation, an ammonium cation or half an alkaline earth metal or zinc cation and z represents a number from 2 to 8,
and optionally sulphur in an organic solvent,
**characterized in that** the organic solvent is removed from the resulting suspension, the mixture containing the organosilicon compound of the general formula (I) and the solid MX is mixed with water, containing at least one buffer, and the resulting phases are separated.

## Revendications

1. Procédé pour la préparation d'un composé organosilicié de formule générale (I),
(R¹R²R³SiR⁴)₂Sₓ (I)
dans laquelle
R¹, R², R³, identiques ou différents chacun, sont des groupes alkyle ramifiés ou non ramifiés, des groupes alcoxy ramifiés ou non ramifiés ou des radicaux aryle, au moins l'un des groupes R¹, R², R³ étant un groupe alcoxy,
R⁴ est un groupe hydrocarboné en C₁-C₃₀ à deux liaisons, aliphatique ramifié ou non ramifié, saturé ou insaturé, aromatique ou mixte aliphatique/aromatique,
x est un nombre >1,
par mise en réaction d'halogénoalcoxysilanes de formule générale (II),
R¹R²R³SiR⁴X (II)
dans laquelle
R¹, R², R³, R⁴ ont les significations données dans la formule (I) et
X est un atome d'halogène,
avec un polysulfure sec de formule générale (III)
M₂S_{z} (III)
et/ou un sulfure sec de formule générale (IV),
M₂S (IV)
M représentant un cation alcalin, un cation ammonium, un demi-cation alcalino-terreux ou zinc et
Z représente un nombre allant de 2 à 8,
et éventuellement du soufre dans un solvant organique,
**caractérisé en ce qu'**on élimine le solvant organique de la suspension obtenue, on mélange le mélange, contenant le composé organosilicié de formule générale (I) et le solide MX, avec de l'eau contenant au moins un tampon
et on sépare les phases formées.
